# EUROPÄISCHE PATENTSCHRIFT

(11) **EP 1 920 895 B1**
(45) Veröffentlichungstag und Bekanntmachung des Hinweises auf die Patenterteilung: **13.10.2010**
(21) Anmeldenummer: 07118480.8
(22) Anmeldetag: 15.10.2007
(51) Int. Cl.: B29B 11/16, B29C 70/48, B29C 70/54

(54) **Verfahren zur Herstellung eines Faserverbundbauteils und danach hergestelltes Faserverbundbauteil**
Method for manufacturing a fibrous composite component and fibrous composite component manufactured accordingly
Procédé de fabrication d'un élément composite en fibres et élément composite en fibres fabriqué selon celui-ci

(30) Priorität: 10.11.2006 DE 102006053985
(43) Veröffentlichungstag der Anmeldung: 14.05.2008
(73) Patentinhaber: Rolls-Royce Deutschland Ltd & Co KG, 15827 Blankenfelde-Mahlow (DE)
(72) Erfinder: Schreiber, Karl, 15838, Am Mellensee (DE)
(74) Vertreter: Wablat, Wolfgang

(56) Entgegenhaltungen:
- WO-A-2005/011962
- DE-A1- 19 952 443

## Beschreibung

Die Erfindung betrifft ein Verfahren zur Herstellung eines Faserverbundbauteil, insbesondere einer Fanschaufel aus Faserverbundmaterial für ein Flugtriebwerk, bei dem entsprechend der Bauteilform zugeschnittene und übereinander gelegte Fasermatten mit einem Kunstharz infiltriert werden, sowie ein nach dem Verfahren hergestelltes Faserverbundbauteil.

Fanschaufeln, die aus einem Faserverbundwerkstoff bestehen, werden üblicherweise aus Fasermatten hergestellt, die in einer offenen Form möglichst positionsgenau übereinander gelegt werden müssen. Eine automatisierte Handhabung der Fasermatten beim Übereinanderlegen ist wegen der erforderlichen Positionsgenauigkeit nicht möglich. Die Fasermatten können nicht so exakt übereinander gelegt werden, dass der Rand des Gebildes aus übereinander gelegten Fasermatten glatt und präzise ausgeführt ist, so dass letztlich auch die Schaufel nicht exakt ausgebildet ist bzw. das Fasermattengebilde eine dieses umschließende Blechumhüllung nicht exakt ausfüllt. Am Rand vorhandene Faserpartikel können sich beim Schweißen der Blechummantelung negativ auf die Schweißnahtqualität auswirken. Ein weiterer wesentlicher Nachteil ist, dass sich die Fasermatten beim Infiltrieren des Kunstharzes in das Fasermattengebilde aufgrund der langen Wege und des hohen Druckes verschieben können, aber die Verschiebung und der daraus resultierende Qualitätsmangel nicht erkannt wird.

Die Merkmale des Oberbegriffs des Anspruchs 1 sind aus dem WO-A-2005/011962 bekannt.

Der Erfindung liegt die Aufgabe zugrunde, ein Verfahren zur Herstellung eines Faserverbundbauteils anzugeben, das in Bezug auf die mechanischen Eigenschaften sowie die Form und die Schweißnahtausbildung einer gegebenenfalls vorgesehenen Blechummantelung eine hohe Bauteilqualität gewährleistet.

Erfindungsgemäß wird die Aufgabe mit einem Verfahren zur Herstellung eines Faserverbundbauteils gemäß den Merkmalen des Patentanspruchs 1 sowie einem nach dem Verfahren hergestellten Faserverbundbauteil gelöst.

Kern des erfindungsgemäßen Verfahrens ist die Verwendung trockener, nicht vorimprägnierter Fasermatten, die in einer Einlegeform mit Positioniernadeln fixiert und noch in der Einlegeform mit das Fasermattengebilde senkrecht durchgreifenden Fäden vernäht werden. Das durch das Vernähen vorgeformte, versteifte und verfestigte Gebilde, in dem die Fasermatten gegenüber dem bei der späteren Infiltration wirkenden Druck fixiert sind, wird an den Kanten mit einem thermoplastischen Material umnäht, wobei die Kanten anschließend unter Wärmeeinwirkung ausgeformt und geglättet werden. Fasern im Randbereich werden dabei in das thermoplastische Material eingebunden. Jetzt noch überstehende Fasern werden abgeschnitten. In den so vorbereiteten Bauteilrohling wird nun in einer geschlossenen Infiltrationsform ein Kunstharz infiltriert. Das fertige Faserverbundbauteil zeichnet sich durch hohe Festigkeit, glatte Randkonturen ohne Faserreste und glatte Oberflächen aus. Das Faserverbundbauteil liegt passgenau in einem dieses ganz oder teilweise umschließenden Blechmantel, dessen qualitätsgerechte Schweißnahtausbildung aufgrund nicht mehr vorhandener Faserpartikel gewährleistet ist.

Gemäß einem weiteren wichtigen Merkmal der Erfindung wurden in dem Bauteil während der Herstellung metallische Markierungen aus dünnen, weichen Drähten vernäht, so dass nach der Kunstharzinfiltration, bei der sich die Fasermatten aufgrund des hohen Infiltrationsdruckes verschieben könnten, eine zerstörungsfreie Prüfung durchgeführt werden kann.

Ein Ausführungsbeispiel des erfindungsgemäßen Verfahrens zur Herstellung einer Fanschaufel aus Faserverbundmaterial für ein Gasturbinentriebwerk wird im folgenden näher erläutert.

Trockene, das heißt, nicht mit einem Harz vorimprägnierte Fasermatten, hier bestehend aus einem Geflecht aus Kohlenstofffasern, werden entsprechend der Schaufelform zugeschnitten und dann in eine entsprechend der Schaufelkrümmung gewölbte Einlegeform gelegt. In der Form befinden sich nach unten ausfahrbare Positioniernadeln, die während des Einbringens der Fasermatten deren Verrutschen verhindern. Mit dem Einlegen der Fasermatten werden an bestimmten Stellen zwischen den Matten in X- und Y-Richtung sowie in Z-Richtung metallische Markierungen in Form dünner, weicher Metalldrähte oder Metalldrahtkreuze positioniert bzw. in das Gewebe integriert. Die Markierungen, die mit einem Metallfaden eingenäht werden, dienen zur zerstörungsfreien Prüfung der lagerichtigen Anordnung der Fasermatten nach Fertigstellung der Fanschaufel. Die übereinander gelegten Fasermatten werden jetzt in Z-Richtung, und zwar noch in der durch die Positioniernadeln fixierten Lage, in der Einlegeform miteinander vernäht. Das so vorgeformte Schaufelgebilde wird anschließend am Rand mit einem aus thermoplastischem Material bestehenden Faden umnäht. Unter Aufschmelzen des thermoplastischen Materials wird der Rand danach mit einem heißen Werkzeug geglättet und im gleichen Arbeitsgang werden dann noch überstehende Fasern abgeschnitten. Dadurch wird zum einen eine glatte, von Kohlenstoffpartikeln freie Schaufelkante erzeugt, die sich genau in eine später verschweißte Blechummantelung der Schaufel einpasst und genau am Innenumfang der Blechummantelung anliegt, und die zudem beim Verschweißen der Blechummantelung eine saubere, nicht durch Kohlenstoffteilchen gefährdete Schweißnahtausbildung gewährleistet.

In das vernähte Faserlagengebilde wird jetzt unter hohem Druck ein Kunstharz infiltriert. In einer ersten Ausführungsvariante erfolgt das Infiltrieren des bei erhöhter Temperatur flüssigen Kunstharzes, wenn sich das Faserlagengebilde in einer im Wesentlichen geschlossenen Infiltrationsform befindet. Nach dem Abkühlen und der Entnahme des Faserverbundbauteils aus der Infiltrationsform wird mittels Röntgenstrahlen, Computertomographie oder ähnlichen Verfahren geprüft, ob sich die metallischen Markierungen und damit die Kohlenstofffasergewebelagen während des Infiltrierens nicht verschoben haben und das Faserverbundbauteil diesbezüglich den Qualitätsanforderungen genügt. Anschließend kann das Faserverbundbauteil mit einem lasergeschweißten Blechmantel umhüllt werden.

Gemäß einer zweiten Ausführungsvariante kann das Faserlagengebilde schon vor dem Infiltrieren mit einer Blechummantelung umhüllt werden, wobei das Kunstharz dann unmittelbar in die Blechhülle bzw. in das in der Blechhülle befindliche Fasergebilde infiltriert wird. Bei der anschließenden Qualitätskontrolle wird wieder - beispielsweise computertomographisch - geprüft, ob die Fasergewebelagen auch nach der Harzinfiltration ihre ursprüngliche Lage beibehalten haben.

Die nach dem oben beschriebenen Verfahren hergestellte und ausgebildete Fanschaufel wird hinsichtlich der lagerichtigen Anordnung der Faserlagen, der genauen Dimensionierung und passgenauen Einbindung des Faserverbundgebildes in die Blechumhülllung sowie der Schweißnahtqualität der Blechummantelung und der durch das senkrechte Vernähen der Faserlagen verbesserten Festigkeit und verminderten Delaminationsgefahr höchsten Qualitätsanforderungen gerecht.

Die Erfindung ist nicht auf das zuvor beschriebene Ausführungsbeispiel beschränkt. Beispielsweise können auch andere Faserstoffe bzw. Faserstoffkombinationen aus unterschiedlichen Fasern eingesetzt werden und gleichermaßen auch andere Faserverbundbauteile in der gleichen Ausbildung und nach dem gleichen Verfahren hergestellt werden.

## Patentansprüche

1. Verfahren zur Herstellung eines Faserverbundbauteils, insbesondere einer Fanschaufel aus Faserverbundmaterial für ein Flugtriebwerk, wobei entsprechend der Bauteilform zugeschnittene und übereinander gelegte Fasermatten mit einem Kunstharz infiltriert werden, **dadurch gekennzeichnet, dass**
- trockene Fasermatten in einer entsprechend der Bauteilkrümmung gewölbten Einlegeform übereinander gelegt und mit die Fasermatten durchgreifenden Positioniernadeln lagerichtig positioniert und fixiert werden;
- die übereinander liegenden Fasermatten anschließend in der Einlegeform mit die Fasermatten senkrecht durchgreifenden Fäden vernäht werden;
- der so vorgeformte Bauteilrohling an den Kanten mit einem Faden aus thermoplastischem Material umnäht wird und
- das thermoplastische Material zunächst erwärmt wird und die Kanten anschließend mit einem Werkzeug geglättet und überstehende Faserspitzen abgeschnitten werden; und
- in den von einer geschlossenen Form umgebenen Bauteilrohling anschließend das Kunstharz infiltriert wird.

2. Verfahren nach Anspruch 1, **dadurch gekennzeichnet, dass** die Kunstharzinfiltration in einer an die Bauteilform angepassten Infiltrationsform erfolgt.

3. Verfahren nach Anspruch 2, **dadurch gekennzeichnet, dass** das infiltrierte Faserverbundbauteil mit einem an dessen Außenkontur grenzenden Blechmantel umhüllt wird.

4. Verfahren nach Anspruch 1, **dadurch gekennzeichnet, dass** der Bauteilrohling mit einem an diesem verbleibenden Blechmantel umhüllt und die Kunstharzinfiltration in dem Blechmantel durchgeführt wird.

5. Verfahren nach Anspruch 1, **dadurch gekennzeichnet, dass** beim Einlegen der trockenen Fasermatten in die Einlegeform in x/y-Richtung verteilte metallische Markierungen, die durch Röntgenstrahlen oder andere Verfahren von außen sichtbar gemacht werden können, an mindestens einer der Fasermatten vernäht werden oder in das Gewebe integriert sind.

6. Verfahren nach Anspruch 5, **dadurch gekennzeichnet, dass** die metallischen Markierungen aus dünnem, weichem Draht in Form eines Kreuzes bestehen.

7. Verfahren nach einem der vorhergehenden Ansprüche, **dadurch gekennzeichnet, dass** das fertige Faserverbundbauteil mit oder ohne Blechmantel mit röntgenologischen, computertomographischen oder ähnlichen Verfahren auf eine Verschiebung der Fasermatten infolge des Infiltrationsdruckes geprüft wird.

8. Faserverbundbauteil, bestehend aus einem Fasermattengebilde mit infiltriertem Kunstharz, hergestellt gemäß dem Verfahren nach Anspruch 1 bis 7, mit
übereinander liegenden, senkrecht zur Auflagefläche miteinander vernähten trockenen Fasermatten, wobei das Fasermattengebilde am Rand thermoplastisch umnäht ist und die Kanten thermoplastisch geglättet sind.

9. Faserverbundbauteil nach Anspruch 8, **dadurch gekennzeichnet, dass** in diesem metallische Markierungen für die zerstörungsfreie Prüfung angebracht sind.

10. Faserverbundbauteil nach Anspruch 8 oder 9, **dadurch gekennzeichnet, dass** es passgenau ganz oder teilweise von einem Blechmantel umgeben ist.

## Claims

1. Method for the manufacture of a fiber-composite component, more particularly a fan blade made of fiber-composite material for an aircraft engine, with fiber mats cut according to the shape of the component and superimposed one upon the other being infiltrated with synthetic resin, **characterized in that**
- dry fiber mats are placed one upon the other into a lay-up mould curved according to the curvature of the component and correctly positioned and fixed by means of locating pins, passed through the fiber mats;
- the superimposed fiber mats are subsequently sewn together in the lay-up mould by means of threads passed vertically through the fiber mats;
- the blank thus preformed is whipped at its edges with a thread of thermoplastic material;
- the thermoplastic material is heated-up and the edges are subsequently smoothed by means of a tool and protruding fiber tips are cut off, and
- the blank enclosed by a closed mould is subsequently infiltrated with synthetic resin.

2. Method in accordance with Claim 1, **characterized in that** the synthetic resin is infiltrated in an infiltration mould adapted to the shape of the component.

3. Method in accordance with Claim 2, **characterized in that** the infiltrated fiber-composite component is enclosed by a sheet-metal sheathing which mates with the outer contour of the component.

4. Method in accordance with Claim 1, **characterized in that** the blank is enclosed by a sheet-metal sheathing remaining at the blank, and **in that** the synthetic resin is infiltrated in the sheet-metal sheathing.

5. Method in accordance with Claim 1, **characterized in that** metallic indicators distributed in x/y direction, which can be made visible from the outside by radiography or other procedures, are sewn on at least one of the fiber mats or integrated into the weave, when placing the dry fiber mats into the lay-up mould.

6. Method in accordance with Claim 5, **characterized in that** the metallic indicators are made of thin, soft wire in the shape of a cross.

7. Method in accordance with one of the preceding Claims, **characterized in that** the finished fiber-composite component with or without sheet-metal sheathing is inspected for displacement of the fiber mats due to the infiltration pressure by means of radiography, computer tomography or similar procedures.

8. Fiber-composite component including an entity of fiber mats with infiltrated synthetic resin, manufactured in accordance with the method of Claims 1 through 7, with superimposed dry fiber mats, which are sewn together vertically to the supporting surface, with the entity of fiber mats being whipped at its edges with thermoplastic material and the edges being thermoplastically smoothed.

9. Fiber-composite component in accordance with Claim 8, **characterized in that** metallic indicators for non-destructive testing are provided in the fiber-composite component.

10. Fiber-composite component in accordance with Claim 8 or 9, **characterized in that** it is accurately enclosed, fully or partly, by a sheet-metal sheathing.

## Revendications

1. Procédé pour fabriquer un composant renforcé aux fibres, en particulier une aube de soufflante en matériau composite renforcé aux fibres pour un moteur d'avion, dans lequel des matelas de fibres découpés conformément à la forme du composant et superposés sont infiltrés par une résine synthétique, **caractérisé en ce**
- **que** des matelas de fibres secs sont superposés dans un moule d'insertion incurvé conformément à la courbure du composant puis correctement positionnés et fixés par les aiguilles de positionnement pénétrant les matelas de fibres ;
- **que** les matelas de fibres superposés sont ensuite cousus dans le moule d'insertion avec des fils pénétrant verticalement les matelas de fibres ;
- **que** l'ébauche de composant ainsi formée est cousue sur ses bords avec un fil en matériau thermoplastique et
- **que** le matériau thermoplastique est tout d'abord chauffé, et les arêtes sont ensuite polies avec un outil, et les pointes de fibres qui dépassent sont coupées ; et
- **qu'**enfin la résine synthétique est infiltrée dans l'ébauche de composant entourée d'un moule fermé.

2. Procédé selon la revendication n° 1, **caractérisé en ce que** l'infiltration de la résine synthétique a lieu dans un moule d'infiltration adapté à la forme du composant.

3. Procédé selon la revendication n° 2, **caractérisé en ce que** le composant infiltré renforcé aux fibres est enveloppé par une enveloppe métallique contiguë à son contour extérieur.

4. Procédé selon la revendication n° 1, **caractérisé en ce que** l'ébauche de composant est enveloppée par une enveloppe métallique restant sur celle-ci et que l'infiltration de résine synthétique est effectuée dans l'enveloppe métallique.

5. Procédé selon la revendication n° 1, **caractérisé en ce que** lors de l'insertion des matelas de fibres secs dans le moule d'insertion, des repères métalliques répartis dans les directions x/y, et qui peuvent être rendus visibles de l'extérieur par des rayons X ou autres procédés, sont cousus sur au moins l'un des matelas de fibres ou intégrés dans le tissu.

6. Procédé selon la revendication n° 5, **caractérisé en ce que** les repères métalliques sont constitués d'un fil mince et souple ayant la forme d'une croix.

7. Procédé selon une des revendications précédentes, **caractérisé en ce que** le composant renforcé aux fibres fini est contrôlé avec ou sans enveloppe métallique quant à un déplacement des matelas de fibres suite à la pression d'infiltration avec un procédé radiologique, scannographique ou similaire.

8. Composant renforcé aux fibres, constitué d'une structure de matelas de fibres avec de la résine synthétique infiltrée, fabriqué conformément au procédé selon les revendications n° 1 à n° 7, avec des matelas de fibres secs superposés et cousus entre eux perpendiculairement à la surface d'appui, sachant que la structure de matelas de fibres est cousue thermoplastiquement sur ses bords et que les arêtes sont polies thermoplastiquement.

9. Composant renforcé aux fibres selon la revendication n° 8, **caractérisé en ce que** dans celui-ci sont disposés des repères métalliques pour le contrôle non destructif.

10. Composant renforcé aux fibres selon la revendication n° 8 ou n° 9, **caractérisé en ce qu'**il est intégralement ou partiellement entouré d'une enveloppe métallique de manière ajustée.
